# EUROPEAN PATENT APPLICATION

(11) **EP 4 838 215 A1**
(43) Date of publication of application: **11.11.2026**
(21) Application number: 25305653.5
(22) Date of filing: 07.05.2025
(51) Int. Cl.: G01N 30/86

(54) **USE OF PYRIDINE ALKYL ESTER DERIVATIVES AS RETENTION INDEX STANDARDS**

(71) Applicant: Université d'Aix-Marseille, 13007 Marseille (FR); Centre National de la Recherche Scientifique, 75016 Paris (FR); Institut de Recherche pour le Développement, 13002 Marseille (FR); Assistance Publique Hôpitaux de Marseille, 13005 Marseille (FR); Avignon Universite, 84000 Avignon (FR)
(72) Inventor: GARAYEV, Elnur, 13011 Marseille (FR); FIL, Maximilien Marie Jacques, 83670 Fox-Amphoux (FR); BUN-LLOPET, Sok-Siya, 13011 Marseille (FR); ALIBERT, Sandrine, 13009 Marseille (FR); BAGHDIKIAN, Béatrice, 13010 Marseille (FR); BREAUD, Célia, 13001 Marseille (FR)
(74) Representative: IPAZ

(57) **Abstract**

The invention relates to the use of pyridine alkyl ester derivatives as retention index standards in liquid chromatography, a calibration system for liquid chromatography comprising an homologous series of said retention index standards, the use of said calibration system in liquid chromatography, a method for the identification of at least one analyte of interest in liquid chromatography based on said calibration system, a method for retention time drift correction implementing said calibration system, and a method for evaluating a state of a liquid chromatography system implementing said calibration system.

## Description

The invention relates to the use of pyridine alkyl ester derivatives as retention index standards in liquid chromatography, a calibration system for liquid chromatography comprising an homologous series of said retention index standards, the use of said calibration system in liquid chromatography, a method for the identification of at least one analyte of interest in liquid chromatography based on said calibration system, a method for retention time drift correction implementing said calibration system, and a method for evaluating a state of a liquid chromatography system implementing said calibration system.

In recent years, liquid chromatography techniques, particularly high-performance liquid chromatography (HPLC) and ultra-high-performance liquid chromatography (UHPLC), have become indispensable analytical tools in a wide range of fields, including pharmaceuticals, environmental sciences, food safety, and natural product discovery. These techniques offer high resolution, reproducibility, and sensitivity, making them ideal for separating and/or analyzing complex mixtures.

One of the persistent challenges in liquid chromatography is the identification of natural products directly from crude extracts without prior purification. Nowadays, molecules of natural origin are identified using high-performance techniques such as Ultra High Performance Liquid Chromatography (UHPLC) coupled with High Resolution Mass Spectrometry (HRMS) and Nuclear Magnetic Resonance (NMR). However, NMR is not very sensitive and requires mixtures of low complexity compounds or isolated compounds. The UHPLC-HRMS method remains the technique of first choice when it comes to analyzing complex mixtures, such as plant extracts or for quick and efficient analysis in the area of quality control of pharmaceutical, nutraceutical, cosmetological products. It provides a certain amount of information about molecules: retention time and mass spectrometry fragmentation spectra (MS² spectrum). Retention time, a fundamental chromatographic property, provides crucial information about compound behavior under specific chromatographic conditions. Retention time is an additional parameter in the increasing compound annotation confidence level. Thanks to retention time and mass spectrometry fragmentation spectra, identification is carried out by comparing experimental data with data from databases. Although significant advancements have been made in enhancing compound annotation by mass spectrometry (MS) techniques, most of the current databases are very limited in terms of information on products and contain only MS² fragmentation spectral data and rarely retention time, which makes it difficult to reliably identify natural molecules. Furthermore, the retention time is a highly variable parameter depending on the manufacturer of the chromatography system and the separation method so that it cannot be used as a reliable identification criterion.

Recent studies proposed use of different mixes of homologous compounds in the calculation of retention index applied to liquid chromatography. In particular, CN112255361 discloses the use a calibration system for liquid chromatography comprising a mixture of straight-chain acylcarnitines (SCACs), a series of homologues containing fatty acids of different chain lengths (C0-C30) linked to carnitine *via* ester bonds. This calibration system is used for retention time drift correction based on metabolites or biological compounds. However, modifying the columns seems to significantly deteriorate the chromatographic retention of most hydrophilic metabolites. Additionally, the metabolites seem to be detectable in the ESI positive mode only and neither can be detected in ESI negative mode nor by UV detector. Moreover, the calibration method of CN112255361 is not used for identification of natural products.

The aim of the present invention is to provide a calibration method and/or retention index standards in liquid chromatography which can be used to identify and/or separate natural products and/or polar compounds and which can be easily implemented.

Additionally, there is a need to provide a standardized mix which can cover the whole range of chromatogram as a reproducible standard in LC system qualification and troubleshooting, so that it can reveal the presence of micro leaks or clogging of the LC system or column.

Indeed, the inventors have surprisingly found novel compound derivatives designed to enhance annotation of natural compounds by calculating retention indices, reliability of LCMS systems by correcting retention time shifts, and evaluation of chromatographic systems. These compound derivatives hold potential applications in pharmaceuticals, environmental analysis, food safety, clinical research, and forensic toxicology.

In particular, the inventors have found a calibration system comprising a mixture of molecules of different polarities, as also called retention index standards, to analyze and separate a wide range of polar compounds by liquid chromatography, and more particularly by reverse phase liquid chromatography. The development of the calibration system of the present invention makes it possible to identify molecules of natural origin more reliably and/or on a large scale at international level.

A first object of the present invention is the use of a pyridine alkyl ester derivative as a retention index standard in liquid chromatography, said pyridine alkyl ester derivative being:
(i) a compound responding to following formula (I): 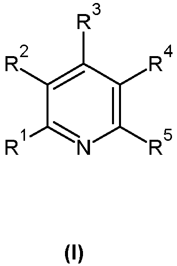 in which:
   - R¹, R⁵ represent, independently from each other, a hydrogen atom, a hydroxyl group, a carboxylic acid group, a ester group of formula -CO₂-L¹ in which L¹ is an alkyl group comprising from 1 to 30 carbon atoms, or a group of formula -CH₂-CO₂-L²-OH in which L² is an alkylene group comprising at least 1 carbon atom,
   - R², R³, R⁴ represent, independently from each other, a hydrogen atom, a hydroxyl group, a carboxylic acid group, a ester group of formula -CO₂-L³ in which L³ is an alkyl group comprising from 1 to 30 carbon atoms, a group of formula - CH₂-CO₂-L⁴- OH in which L⁴ is an alkylene group comprising at least 1 carbon atom, or a -O-CH(CO₂H)(CH₂-CO₂H) group,
   - said compound (I) comprising one ester group represented by formula -CO₂-L¹ (as R¹ or R⁵ group) or formula -CO₂-L³ (as R², R³, or R⁴ group),
   a salt, or a solvate thereof,
   or,
(ii) a compound responding to following formula (I'): 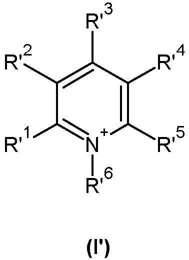 in which:
   - R'¹, R'⁵ represent, independently from each other, a hydrogen atom, a hydroxyl group, a carboxylic acid group, a ester group of formula -CO₂-L'¹ in which L'¹ is an alkyl group comprising from 1 to 30 carbon atoms, or a group of formula
   - CH₂-CO₂-L'²-OH in which L'² is an alkylene group comprising at least 1 carbon atom,
   - R'², R'³, R'⁴ represent, independently from each other, a hydrogen atom, a hydroxyl group, a carboxylic acid group, a ester group of formula -CO₂-L'³ in which L'³ is an alkyl group comprising from 1 to 30 carbon atoms, a group of formula - CH₂-CO₂-L'⁴-OH in which L'⁴ is an alkylene group comprising at least 1 carbon atom, or a -O-CH(CO₂H)(CH₂-CO₂H) group,
   - R'⁶ represents an alkyl group comprising from 1 to 3 carbon atoms or a - (CH₂)ₙ-CO₂H group with n ranging from 1 to 3,
   - said compound (I') comprising one ester group represented by formula - CO₂-L'¹ (as R'¹ or R'⁵ group) or formula -CO₂-L'³ (as R'², R'³, or R'⁴ group),
   a salt, or a solvate thereof.

Thus, the pyridine alkyl ester derivatives used as a retention index standard can be a compound (i) or a compound (ii), where compounds (i) are compounds of formula (I), salts, and solvates thereof and compounds (ii) are compounds of formula (I'), salts, and solvates thereof.

These pyridine alkyl ester derivatives have one ester group represented by formula -CO₂-L¹ (as R¹ or R⁵ group), formula -CO₂-L³, formula -CO₂-L'¹ (as R'¹ or R'⁵ group), or formula -CO₂-L'³. The esters groups, and in particular L¹, L³, L'¹, L'³, enable to modulate the polarity of the derivatives and built a calibration system.

The ester group is preferably represented by formula -CO₂-L³ or formula -CO₂-L'³.

Additionally, all the pyridine alkyl ester derivatives used as retention index standards have a nitrogen atom of the pyridine ring which enables positive ionization.

Moreover, said pyridine alkyl ester derivatives can be easily identify by UV systems, due to aromatic cycle.

In one preferred embodiment, said compound (I) comprises hydroxyl and/or carboxylic acid moities. These moities enable negative ionization.

In one preferred embodiment, said compound (I') comprises hydroxyl and/or carboxylic acid moities. These moities enable negative ionization.

In compound of formula (I), hydroxyl moities can be represented by a hydroxyl group or a group of formula -CH₂-CO₂-L²-OH in which L² is an alkylene group comprising at least 1 carbon atom (as R¹ or R⁵ group), or a hydroxyl group or a group of formula -CH₂-CO₂-L⁴- OH in which L⁴ is an alkylene group comprising at least 1 carbon atom (as R², R³, or R⁴).

In compound of formula (I'), hydroxyl moities can be represented by a hydroxyl group or a group of formula -CH₂-CO₂-L'²-OH in which L'² is an alkylene group comprising at least 1 carbon atom (as R'¹ or R'⁵ group), or a hydroxyl group or a group of formula -CH₂-CO₂-L'⁴-OH in which L'⁴ is an alkylene group comprising at least 1 carbon atom (as R'², R'³, or R'⁴).

In compound of formula (I), carboxylic acid moities can be represented by a carboxylic acid group (as R¹ or R⁵ group), or a carboxylic acid group or a -O-CH(CO₂H)(CH₂-CO₂H) (as R², R³, or R⁴).

In compound of formula (I'), carboxylic acid moities can be represented by a carboxylic acid group (as R¹ or R⁵ group), a carboxylic acid group or a -O-CH(CO₂H)(CH₂-CO₂H) (as R², R³, or R⁴), or a -(CH₂)ₙ-CO₂H group with n ranging from 1 to 3 (as R⁶).

### Compounds (i)

### R¹, R⁵ groups

R¹, R⁵ represent, independently from each other, a hydrogen atom, a hydroxyl group (-OH), a carboxylic acid group (-CO₂H), a ester group of formula -CO₂-L¹ in which L¹ is an alkyl group comprising from 1 to 30 carbon atoms, or a group of formula -CH₂-CO₂-L²-OH in which L² is an alkylene group comprising at least 1 carbon atom, preferably a hydrogen atom, a hydroxyl group, a carboxylic acid group, or a ester group of formula -CO₂-L¹ in which L¹ is an alkyl group comprising from 1 to 30 carbon atoms, and more preferably a hydrogen atom, a hydroxyl group, or a carboxylic acid group.

### L¹

L¹ is an alkyl group comprising from 1 to 30 carbon atoms, preferably from 1 to 25 carbon atoms, and more preferably from 1 to 20 carbon atoms.

The alkyl group can be linear or branched, cyclic or not cyclic, and preferably linear and not cyclic.

Branches can comprise from 1 to 5 carbon atoms, and preferably from 1 to 3 carbon atoms.

### L²

L² is an alkylene group comprising at least 1 carbon atom, preferably from 1 to 30 carbon atoms, and more preferably from 1 to 20 carbon atoms.

The alkylene group can be linear or branched, cyclic or not cyclic, and preferably linear and not cyclic, (i.e. of formula -(CH₂)ₙ- with n corresponding to the number of carbon atoms as defined above).

Branches can comprise from 1 to 5 carbon atoms, and preferably from 1 to 3 carbon atoms.

Examples of compounds (I) having R¹ or R⁵ representing a ester group of formula -CO₂-L¹ in which L¹ is as defined in the first object of the present invention are represented below:

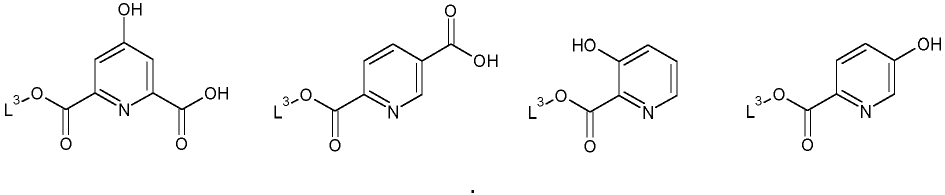

In one particularly preferred embodiment, at least one of R¹ and R⁵ represents a hydrogen atom, and more particularly, R¹ and R⁵ represent hydrogen atoms.

### R², R³, R⁴ groups

R², R³, R⁴ represent, independently from each other, a hydrogen atom, a hydroxyl group, a carboxylic acid group, a ester group of formula -CO₂-L³ in which L³ is an alkyl group comprising from 1 to 30 carbon atoms, a group of formula -CH₂-CO₂-L⁴-OH in which L⁴ is an alkylene group comprising at least 1 carbon atom, or a -O-CH(CO₂H)(CH₂-CO₂H) group, and preferably a hydrogen atom, a hydroxyl group, a carboxylic acid group, a ester group of formula -CO₂-L³ in which L³ is an alkyl group comprising from 1 to 30 carbon atoms, or a -O-CH(CO₂H)(CH₂-CO₂H) group.

### L³

L³ is an alkyl group comprising from 1 to 30 carbon atoms, preferably from 1 to 25 carbon atoms, and more preferably from 1 to 20 carbon atoms.

The alkyl group can be linear or branched, cyclic or not cyclic, and preferably linear and not cyclic.

Branches can comprise from 1 to 5 carbon atoms, and preferably from 1 to 3 carbon atoms.

### L⁴

L⁴ is an alkylene group comprising at least 1 carbon atom, preferably from 1 to 30 carbon atoms, and more preferably from 1 to 20 carbon atoms.

The alkylene group can be linear or branched, cyclic or not cyclic, and preferably linear and not cyclic, (i.e. of formula -(CH₂)ₙ- with n corresponding to the number of carbon atoms as defined above).

Branches can comprise from 1 to 5 carbon atoms, and preferably from 1 to 3 carbon atoms.

Examples of compounds (I) having R³ representing a ester group of formula -CO₂-L³ in which L³ is as defined in the first object of the present invention are represented below:

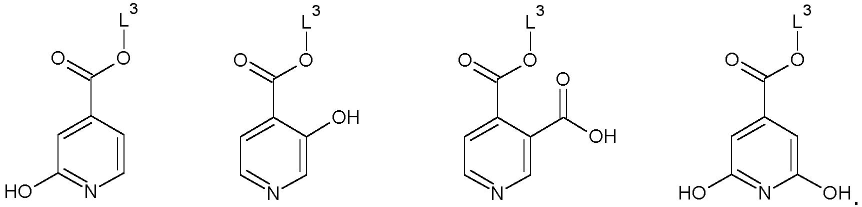

Examples of compounds (I) having R² or R⁴ representing a ester group of formula -CO₂-L³ in which L³ is as defined in the first object of the present invention are represented below:

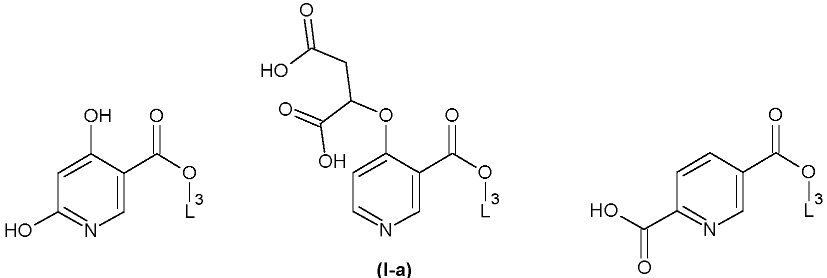

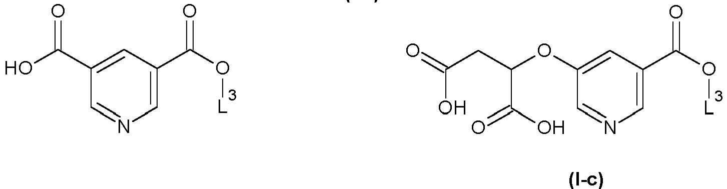

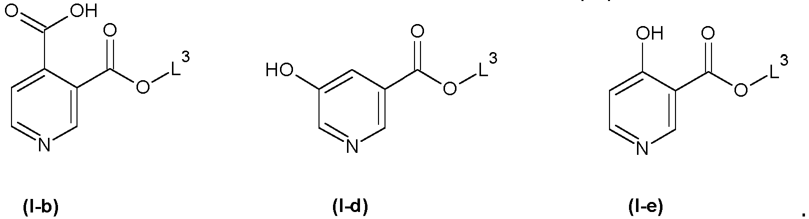

In one preferred embodiment, R⁴ represents a ester group of formula -CO₂-L³ in which L³ is as defined in the first object of the present invention.

R², R³, preferably represent, independently from each other, a hydrogen atom, a hydroxyl group, a carboxylic acid group, or a -O-CH(CO₂H)(CH₂-CO₂H) group.

In one preferred embodiment, any one of R² or R³ represents a hydrogen atom and any other of R² or R³ represents a -O-CH(CO₂H)(CH₂-CO₂H) group, a hydroxyl group, or a carboxylic acid group.

R² preferably represents a hydrogen atom, a hydroxyl group, or a -O-CH(CO₂H)(CH₂-CO₂H) group.

R³ preferably represents a hydrogen atom, a hydroxyl group, a carboxylic acid group, or a -O-CH(CO₂H)(CH₂-CO₂H) group.

### Preferred compounds (i)

In one particular preferred embodiment, R¹ and R⁵ represent a hydrogen atom; R², R³, represent, independently from each other, a hydrogen atom, a hydroxyl group, a carboxylic acid group, or a -O-CH(CO₂H)(CH₂-CO₂H) group; and R⁴ represents a ester group of formula -CO₂-L³ in which L³ is as defined in the first object of the present invention.

In one particularly preferred embodiment, R¹ and R⁵ represent a hydrogen atom; any one of R² or R³ represents a hydrogen atom and any other of R² or R³ represents a -O-CH(CO₂H)(CH₂-CO₂H) group, a hydroxyl group, or a carboxylic acid group; and R⁴ represents a ester group of formula -CO₂-L³ in which L³ is as defined in the first object of the present invention.

Formula (I) is advantageoulsy selected from the following formulae (I-a) to (I-e): 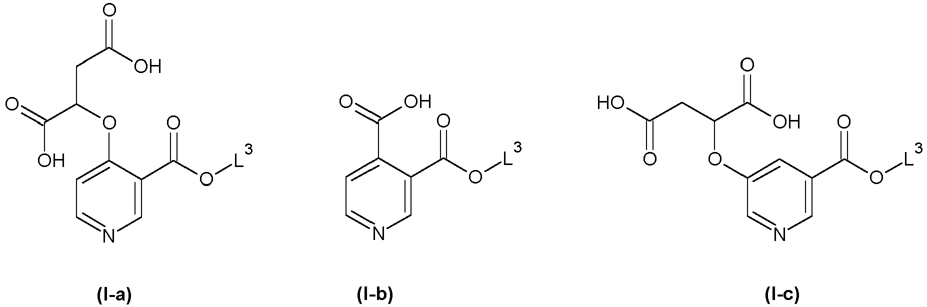 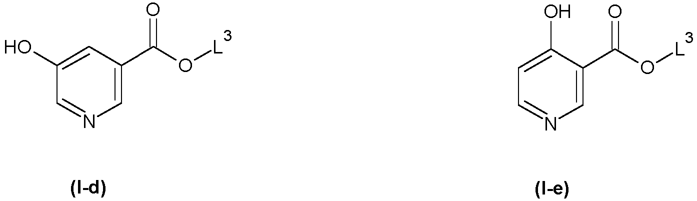 in which L³ is as defined in the first object of the present invention.

### A salt or a solvate thereof

Salts include acetate, adipate, aspartate, benzoate, besylate, bicarbonate/carbonate, bisulphate/sulphate, borate, camsylate, citrate, cyclamate, edisylate, esylate, formate, fumarate, gluceptate, gluconate, glucuronate, hexafluorophosphate, hibenzate, hydrochloride/chloride, hydrobromide/bromide, hydroiodide/iodide, isethionate, lactate, malate, maleate, malonate, mesylate, methylsulphate, naphthylate, 2-napsylate, nicotinate, nitrate, orotate, oxalate, palmitate, pamoate, phosphate/hydrogen phosphate/dihydrogen phosphate, pyroglutamate, saccharate, stearate, succinate, tannate, tartrate, tosylate, trifluoroacetate, and xinafoate salts.

Salts of compounds (I) of the invention may be prepared by reacting the compound (I) with the corresponding appropriate acid or by means of a suitable ion exchange column. All these reactions are typically carried out in solution. The salt may precipitate from solution and be collected by filtration or may be recovered by evaporation of the solvent. The degree of ionization in the salt may vary from completely ionized to almost non-ionized.

Salts also include alkali metal (e.g., sodium, potassium, lithium), alkaline earth metal (e.g., calcium, magnesium, barium), or transition metal (e.g., zinc, iron, copper) salts.

Salts of compounds (I) of the invention may be prepared by reacting the compound (I) with the corresponding appropriate base or by means of a suitable ion exchange column. All these reactions are typically carried out in solution. The salt may precipitate from solution and be collected by filtration or may be recovered by evaporation of the solvent. The degree of ionization in the salt may vary from completely ionized to almost non-ionized.

"Solvate" refers to molecular complex comprising a compound (I) along with stoichiometric or sub-stoichiometric amounts of one or more molecules of one or more solvents. The solvent can be a C₁-C₅ alcohol (for example, ethanol), dioxane, toluene, dimethylformamide (DMF), or acetonitrile. The term "hydrate" refers to a solvate when the solvent is water (H₂O). Solvates of compounds (I) include conventional solvates such as those formed during the last step of preparation of these compounds due to the presence of solvents.

### Compounds (ii)

### R'¹, R'⁵ groups

R'¹, R'⁵ represent, independently from each other, a hydrogen atom, a hydroxyl group, a carboxylic acid group, a ester group of formula -CO₂-L'¹ in which L'¹ is an alkyl group comprising from 1 to 30 carbon atoms, or a group of formula -CH₂-CO₂-L'²-OH in which L'² is an alkylene group comprising at least 1 carbon atom, preferably a hydrogen atom, a hydroxyl group, a carboxylic acid group, or a ester group of formula -CO₂-L'² in which L'² is an alkyl group comprising from 1 to 30 carbon atoms, and more preferably a hydrogen atom, a hydroxyl group, or a carboxylic acid group.

In one particularly preferred embodiment, at least one of R¹ and R⁵ represents a hydrogen atom, and more particularly R'¹ and R'⁵ represent hydrogen atoms.

### L'¹

L'¹ is an alkyl group comprising from 1 to 30 carbon atoms, preferably from 1 to 25 carbon atoms, and more preferably from 1 to 20 carbon atoms.

The alkyl group can be linear or branched, cyclic or not cyclic, and preferably linear and not cyclic.

Branches can comprise from 1 to 5 carbon atoms, and preferably from 1 to 3 carbon atoms.

### L'²

L'² is an alkylene group comprising at least 1 carbon atom, preferably from 1 to 30 carbon atoms, and more preferably from 1 to 20 carbon atoms.

The alkylene group can be linear or branched, cyclic or not cyclic, and preferably linear and not cyclic, (i.e. of formula -(CH₂)ₙ- with n corresponding to the number of carbon atoms as defined above).

Branches can comprise from 1 to 5 carbon atoms, and preferably from 1 to 3 carbon atoms.

In one particularly preferred embodiment, R'¹ and R'⁵ represent hydrogen atoms.

### R'², R'³, R'⁴ groups

R'², R'³, R'⁴ represent, independently from each other, a hydrogen atom, a hydroxyl group, a carboxylic acid group, a ester group of formula -CO₂-L'³ in which L'³ is an alkyl group comprising from 1 to 30 carbon atoms, a group of formula -CH₂-CO₂-L'⁴-OH in which L'⁴ is an alkylene group comprising at least 1 carbon atom, or a - O-CH(CO₂H)(CH₂-CO₂H) group, and preferably a hydrogen atom, a hydroxyl group, a carboxylic acid group, a ester group of formula -CO₂-L'³ in which L'³ is an alkyl group comprising from 1 to 30 carbon atoms or a -O-CH(CO₂H)(CH₂-CO₂H) group.

### L'³

L'³ is an alkyl group comprising from 1 to 30 carbon atoms, preferably from 1 to 25 carbon atoms, and more preferably from 1 to 20 carbon atoms.

The alkyl group can be linear or branched, cyclic or not cyclic, and preferably linear and not cyclic.

Branches can comprise from 1 to 5 carbon atoms, and preferably from 1 to 3 carbon atoms.

### L'⁴

L'⁴ is an alkylene group comprising at least 1 carbon atom, preferably from 1 to 30 carbon atoms, and more preferably from 1 to 20 carbon atoms.

The alkylene group can be linear or branched, cyclic or not cyclic, and preferably linear and not cyclic, (i.e. of formula -(CH₂)ₙ- with n corresponding to the number of carbon atoms as defined above).

Branches can comprise from 1 to 5 carbon atoms, and preferably from 1 to 3 carbon atoms.

In one preferred embodiment, R'⁴ represents a ester group of formula -CO₂-L'³ in which L'³ is as defined in the first object of the present invention.

R'², R'³, preferably represent, independently from each other, a hydrogen atom, a hydroxyl group, a carboxylic acid group, or a -O-CH(CO₂H)(CH₂-CO₂H) group.

In one preferred embodiment, any one of R'² or R'³ represents a hydrogen atom and any other of R'² or R'³ represents a -O-CH(CO₂H)(CH₂-CO₂H) group, a hydroxyl group, or a carboxylic acid group.

R'² preferably represents a hydrogen atom, a hydroxyl group, or a -O-CH(CO₂H)(CH₂-CO₂H) group.

R'³ preferably represents a hydrogen atom, a hydroxyl group, a carboxylic acid group, or a -O-CH(CO₂H)(CH₂-CO₂H) group.

### R'⁶ group

R'⁶ represents an alkyl group comprising from 1 to 3 carbon atoms or a -(CH₂)ₙ-CO₂H group with n ranging from 1 to 3.

The alkyl group as R'⁶ preferably comprises from 1 to 20 carbon atoms, more preferably from 1 to 10 carbon atoms, and even more preferably from 1 to 5 carbon atoms.

n is an integer. Preferably, n = 1.

### Preferred compounds (ii)

In one particular preferred embodiment, R'¹ and R'⁵ represent a hydrogen atom; R'², R'³, represent, independently from each other, a hydrogen atom, a hydroxyl group, a carboxylic acid group, or a -O-CH(CO₂H)(CH₂-CO₂H) group; and R'⁴ represents a ester group of formula -CO₂-L'³ in which L'³ is as defined in the first object of the present invention.

In one particularly preferred embodiment, R'¹ and R'⁵ represent a hydrogen atom; any one of R'² or R'³ represents a hydrogen atom and any other of R'² or R'³ represents a -O-CH(CO₂H)(CH₂-CO₂H) group, a hydroxyl group, or a carboxylic acid group; and R'⁴ represents a ester group of formula -CO₂-L'³ in which L'³ is as defined in the first object of the present invention.

Formula (I') is advantageoulsy selected from the following formulae (I'-a) to (I'-e): 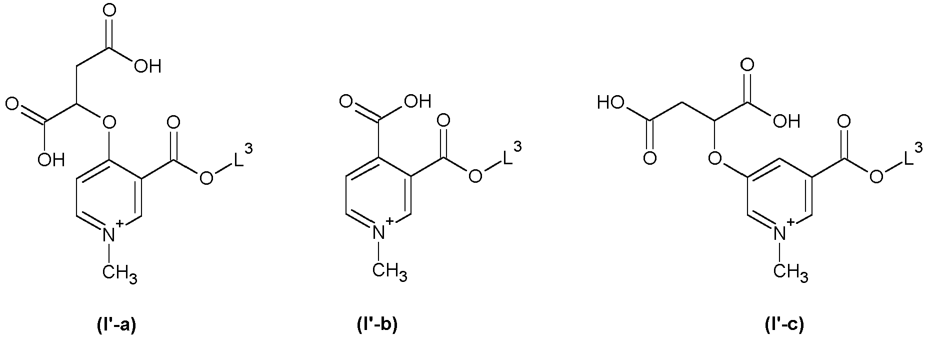 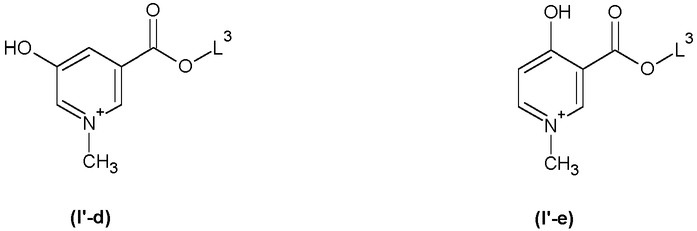 in which L'³ is as defined in the first object of the present invention.

### A salt or a solvate thereof

Salts include acetate, adipate, aspartate, benzoate, besylate, bicarbonate/carbonate, bisulphate/sulphate, borate, camsylate, citrate, cyclamate, edisylate, esylate, formate, fumarate, gluceptate, gluconate, glucuronate, hexafluorophosphate, hibenzate, hydrochloride/chloride, hydrobromide/bromide, hydroiodide/iodide, isethionate, lactate, malate, maleate, malonate, mesylate, methylsulphate, naphthylate, 2-napsylate, nicotinate, nitrate, orotate, oxalate, palmitate, pamoate, phosphate/hydrogen phosphate/dihydrogen phosphate, pyroglutamate, saccharate, stearate, succinate, tannate, tartrate, tosylate, trifluoroacetate, and xinafoate salts.

Salts of compounds (I') of the invention may be prepared by reacting the compound (I') with the corresponding appropriate acid or by means of a suitable ion exchange column. All these reactions are typically carried out in solution. The salt may precipitate from solution and be collected by filtration or may be recovered by evaporation of the solvent. The degree of ionization in the salt may vary from completely ionized to almost non-ionized.

Salts also include alkali metal (e.g., sodium, potassium, lithium), alkaline earth metal (e.g., calcium, magnesium, barium), or transition metal (e.g., zinc, iron, copper) salts.

Salts of compounds (I') of the invention may be prepared by reacting the compound (I') with the corresponding appropriate base or by means of a suitable ion exchange column. All these reactions are typically carried out in solution. The salt may precipitate from solution and be collected by filtration or may be recovered by evaporation of the solvent. The degree of ionization in the salt may vary from completely ionized to almost non-ionized.

"Solvate" refers to molecular complex comprising a compound (I') along with stoichiometric or sub-stoichiometric amounts of one or more molecules of one or more solvents. The solvent can be a C₁-C₅ alcohol (for example ethanol), dioxane, toluene, dimethylformamide (DMF), or acetonitrile. The term "hydrate" refers to a solvate when the solvent is water (H₂O). Solvates of compounds (I') include conventional solvates such as those formed during the last step of preparation of these compounds due to the presence of solvents.

In one preferred embodiment, said pyridine alkyl ester derivative is a compound (i), i.e. a compound of formula (I), a salt, or a solvate thereof.

Liquid chromatography may include liquid chromatography-mass spectrometry, liquid chromatography with an ultraviolet absorbance detection system (DAD, MWD, VWD), liquid chromatography with electro light scattering detection system (ELSD), liquid chromatography with electrochemical detection system (ECD), or liquid chromatography with charged aerosol detection system (CAD).

The compounds (i) and (ii) are particularly useful in reverse phase liquid chromatography.

A second object of the present invention, is a calibration system for liquid chromatography, wherein it comprises an homologous series of retention index standards, wherein said retention index standards are selected from compounds (i) as defined in the first object of the present invention, compounds (ii) as defined in the first object of the present invention, and mixture thereof.

According to one first variant, the calibration system comprises an homologous series of retention index standards, wherein said retention index standards are compounds (I'), salts, or solvates thereof as defined in the first object of the present invention, wherein each of said compounds (I'), salts, or solvates thereof has said ester group comprising a different number of carbon atoms from other said compounds of formula (I').

According to one second variant, the calibration system for liquid chromatography comprises an homologous series of retention index standards, wherein said retention index standards are compounds of formula (I) , salts, or solvates thereof as defined in the first object of the present invention, wherein each of said compounds of formula (I) has said ester group comprising a different number of carbon atoms from other said compounds of formula (I).

According to a third variant, the calibration system for liquid chromatography comprises two homologous series of retention index standards, wherein said retention index standards are compounds of formula (I) , salts, or solvates thereof as defined in the first object of the present invention and compounds of formula (II) , salts, or solvates thereof as defined in the first object of the present invention.

The calibration system can comprise from 3 to 30 homologues, preferably from 3 to 25 homologues, and more preferably from 3 to 20 homologues.

A third object of the present invention is the use of a calibration system as defined in the second object of the present invention in liquid chromatography, preferably in liquid chromatography-mass spectrometry, liquid chromatography with an ultraviolet absorbance detection system (DAD, MWD, VWD), liquid chromatography with electro light scattering detection system (ELSD), liquid chromatography with electrochemical detection system (ECD), or liquid chromatography with charged aerosol detection system (CAD).

The calibration system of the present invention is particularly appropriate in reverse phase liquid chromatography.

The calibration system is particularly useful for identifying and/or separating one or more analytes of interest as defined in the fourth object of the present invention such as natural products, for evaluating a state of a liquid chromatography system (quality control), or for correcting retention time drift.

Indeed, the retention index standards as defined in the first object of the present invention can be used for the system suitability evaluation and diagnostics of problems of liquid chromatography systems and columns.

A fourth object of the present invention is a method for the identification of at least one analyte of interest in liquid chromatography based on a calibration system as defined in the second object of the present invention, wherein it comprises at least the following steps :
- introducing a calibration system as defined in the second object of the present invention into a liquid chromatography system;
- introducing an analyte of interest into said liquid chromatography system;
- assigning a retention index value to the analyte of interest based on a retention time corresponding to a peak of said analyte of interest, a retention time corresponding to a peak of a compound (i) or (ii) of said calibration system preceding said peak of said analyte of interest, a retention time corresponding to a peak of a compound (i) or (ii) of said calibration system following said peak of said analyte of interest, and a number of carbon atoms present in said compound (i) or (ii) whose retention time peak preceeds said peak of said analyte of interest; and
- comparing the retention index value of the analyte of interest to a library of retention index values for known compounds to identify the analyte of interest.

The retention index value (RI) of an unknown peak or of analyte of interest can be calculated using the following equation: $RI = 100 \times \left({C}_{np}+\frac{{RT}_{c} - {RT}_{p}}{{RT}_{f} - {RT}_{p}}\right) ,$ where RTc is the retention time of a peak of unknown compound, RTp is the retention time of compound (i) or (ii) peak preceding the peak of unknown compound, RTf is the retention time of compound (i) or (ii) peak following the peak of unknown compound, and Cnp is the number of carbons of compound (i) or (ii) (i.e. which has a retention time peak preceding the retention time peak of unknown compound), said compound (i) or (ii) being part of the calibration system.

In the method of the present invention, the analyte of interest (also called unknown compound) may be a natural product, preferably selected from shikimates, phenylpropanoids, alkaloids, terpenoids, lipids, amino acids, peptides, carbohydrates, flavonoids, glycosides, steroids, saponins, coumarins, lignans, polyketides, or nucleosides; or may be from other fields requiring identification, including but not limited to environmental pollutants, industrial chemicals, toxicants, toxins, forensic substances, pharmaceuticals, drug metabolites, xenobiotics, pesticides, herbicides, veterinary drugs, food additives, food contaminants, cosmetic ingredients, synthetic organic intermediates, doping agents, explosives, degradation products, or their derivatives.

The analyte of interest is preferably a natural product. The identification of compounds is mainly necessary in the field of natural products discovery.

The introduction step of the analyte of interest (respectively of the calibration system) is preferably an injection step of said analyte of interest (respectively of said calibration system) into a chromatographic column of said liquid chromatography system.

The introduction step of the analyte of interest can be performed with the introduction of the calibration system (at the same time) or after the introduction of the calibration system.

A fifth object of the present invention is a method for retention time drift correction, wherein it comprises at least the following steps:
a) introducing a calibration system as defined in the second as defined in the second object of the present invention into a liquid chromatography system to be tested,
b) recording a new chromatogram,
c) comparing said new chromatogram with a reference chromatogram of said calibration system and calculating a drift coefficient for each peak of said calibration system,
d) introducing at least one analyte of interest into said liquid chromatography system, and
e) correcting a retention time drift of said analyte of interest based on said drift coefficients.

The analyte of interest is defined in the Retention time drift is one of the major problems in metabolomics as it can lead to erroneous identification of two identical molecules peaks in different samples. When analyses are realized with a long time interval or samples are analyzed on two same columns but with different batch numbers, the peaks of analyzed compounds can drift. To overcome this problem, it is possible to implement a retention time drift corrector method according to the fifth object of the present invention.

The method according to the fifth object of the present invention can be implemented by means of a computer and/or a software.

In particular, the data obtained with the calibration system in the reference chromatogram and in the chromatogram and the date obtained when introducing the analyte of interest can be converted to open an format .mzML or .mzXML. Said dat can then be treated with (in-house) python script for obtaining a correct calibration or correct retention time.

In the reference chromatogram, all retention times of retention index standards peaks of said calibration system can be recorded, preferably in a software memory. Retention times (for example for a calibration system based on compounds (i)) obtained can be called RT_{(i-1)ref}, RT_{(i-2)ref}, RT_{(i-3)ref}, RT_{(i-4)ref}, etc...

In step b), after step a), all retention times of retention index standards peaks of said calibration system can be recorded, preferably in a software memory. Retention times (for example for a calibration system based on said compounds (i)) obtained can be called RT₍ᵢ₋₁₎, RT₍ᵢ₋₂₎, RT₍ᵢ₋₃₎, RT₍ᵢ₋₄₎, etc...

In step c), the retention times of each retention index standard peak of the reference chromatogram can be divided by those obtained in step b) to calculate a drift coefficient DC for each peak. The calculation is DC₍ᵢ₋₁₎ = RT_{(i-1)ref}/RT₍ᵢ₋₁₎, DC₍ᵢ₋₂₎ = RT_{(i-2)ref}/RT₍ᵢ₋₂₎, DC₍ᵢ₋₃₎ = RT_{(i-3)ref}/RT₍ᵢ₋₃₎, DC(i-4) = RT_{(i-4)ref}/RT₍ᵢ₋₄₎, etc...

A linear regression model, DC=aRT+b, can be used in order to calculate the coefficients that should be applied for each timepoint of chromatogram between retention index standards peaks, where RT are retention times and DC are coefficients of two following peaks of retention index standards, respectively.

Coefficients for the chromatogram part before the first and after the last peak of retention index standards can be kept the same as applied to the first and to the last peak, respectively.

The coefficients calculated for each retention index standard timepoint can then be applied to at least one analyte of interest (including the calibration system) injected according to step d).

In particular, after step d); a chromatogram can be recorded and a retention time of said analyte of interest RT_{A} is obtained. Thanks to the linear regression model constructed for retention index standards as described above, a and b are known for the curve/line obtained from the retention time of a compound (i) peak preceding the peak of analyte of interest to the retention time of a compound (i) peak following the peak of analyte of interest. For example, the analyte of interest can display a retention time peak RT_{A} between a retention time peak of compound (i-1) RT₍ᵢ₋₁₎ and a retention time peak of compound (i-2) RT₍ᵢ₋₂₎. Consequently, a coefficient drift of said analyte of interest DC_{A} can be calculated and then a corrected retention time of said analyte of interest RT_{A corrected} can be obtained according to the following formula: RT_{A corrected} = RT_{A}*DC_{A}.

Steps a) to e) can be repeated.

A sixth object of the present invention is a method for evaluating a state of a chromatographic system, wherein it comprises at least the following steps:
- introducing a calibration system as defined in the second as defined in the second object of the present invention into a liquid chromatography system to be tested,
- recording a chromatogram,
- comparing said chromatogram with a reference chromatogram of said calibration system, and
- evaluating compliance of said liquid chromatography system or diagnosing one or more issues of said liquid chromatography system.

Main problems with UHPLC (Ultra high performance liquid chromatograhy) and HPLC (high performance liquid chromatograhy) systems are overpressure, microleaks and distorted peak shape.

The method according to the sixth object of the present invention enables to identify overpressure, microleaks and distorted peak shape and/or concludes on a conformity of a liquid chromatographic system.

The introduction step of the calibration system is preferably an injection step of said calibration system into a chromatographic column of said liquid chromatography system.

For the liquid chromatography system conformity evaluation, the chromatographic column can be the object designed for analysis and method to be used.

The reference chromatogram is obtained with a compliant column or a compliant liquid chromatography system.

After several days of chromatographic column use or of liquid chromatography system use or when a problem with said liquid chromatography system is suspected, evaluation may be required on said column or said liquid chromatography system and the calibration system of the present invention is introduced into the liquid chromatography system according to the method as defined in the sixth object of the present invention.

Conclusion can be obtained by comparing the obtained chromatogram with said reference chromatogram.

In particular, if the deviation is more than 0.05 min for UHPLC system or more than 0.1 min for HPLC system, there may be a problem with chromatographic column or liquid chromatographic system.

### Examples

### Materials and Methods

### Chemicals

5-Hydroxynicotinic acid (reference: "APOSOR5565-25G"), methyl 5-hydroxynicotinate (reference: ""APOSOR9567-5G" and mentioned below as compound (**I-d-1**)), ethyl 5-hydroxynicotinate (reference: "APOSOR51770-1G" and mentioned below as compound (**I-d-2**)), 1-undecanol (reference: "ACRO140681000"), 1-dodecanol (reference: "A12228.30"), 1-tridecanol (reference: "EHERC17818300"), 1-tetradecanol (reference: "A19638.36"), 1-pentadecanol (reference: "L03673.06"), 1-hexadecanol (reference: "8.18704.1000") were obtained from VWR.
1-Propanol (reference: "34871-1L"), 1-pentanol (reference: "138975-500ML"), 1-hexanol (reference: "H13303-1L"), 1-heptanol (reference: "8206241000"), 1-octanol (reference: "8209311000"), 1-nonanol (reference: "8068660250"), 1-decanol (reference: "8034631000") and sulfuric acid (reference: "258105-1L-PC") were obtained from Sigma-Aldrich.
1,4-Dioxane (reference: "P03610D16") was obtained from Carlo Erba.

### LC systems and columns

Two different brands of LC system were used in the example part:
- A first LC system LC1 purchased under the reference "Thermo Dionex 3000 Rs" equipped with quaternary pump, autosampler, column oven, DAD/VIS detector and coupled to a High Resolution Mass Spectrometer (HRMS) "Bruker Impact II" with ESI ionization source and qTof detection system.
- a second LC system LC2 purchased under the reference "Agilent 1290" equipped with binary pump, autosampler, column oven, DAD detector and HRMS "Waters Synapt G2-Si" with ESI ionization source and qTof detection system.

Two different chromatographic columns were used in the example part:
- a first column C1 purchased under the reference "Agilent Zorbax Eclipse Plus C₁₈" (100 × 2.1 mm, 1.8 µm), and
- a second column C2 purchased under the reference "Phenomenex Luna Polar C₁₈" (100 × 2.1 mm, 1.6 µm).

The analysis were realized using 0.1% HCOOH in water as solvent A and 0.1% HCOOH in acetonitrile as solvent B with following gradient: 0 - 12 min, 5 - 100% solvent B (i.e. 95-0% solvent A); 12-13 min at 100% solvent B (i.e. 0% solvent A); 13-13.1 min 100 - 5% solvent B (i.e. 0-95% solvent A); 13.1-15 min at 100% solvent B (i.e. 0% solvent A) at a flow rate of 700 µL/min and column at 43°C. Detection was achieved on DAD detector with the wavelength corresponding to maximal absorbance of synthetized molecules at 280 nm.

High Resolution Mass Spectrometer acquisition parameters in positive and negative modes for "Bruker Impact II" (i.e. LC1) were as following: capillary voltage 3kV, carrier gas N₂, heating gas flow 12 l/min, gas pressure 3.5 bar, dry temperature at 250°C, acquisition frequency at 8 Hz and acquisition range 50-1200 m/z.

LC2 chromatographic conditions were the same as for LC1, whereas the HRMS parameters for Synapt G2-Si were as following: capillary voltage 2kV, carrier gas N₂, heating gas flow 8,3 l/min, gas pressure 5 bar, dry temperature at 100°C, acquisition frequency at 4 Hz and acquisition range 50-1200 m/z.

### Example 1: 5-hydroxynicotinic acid (5-Hydroxypyridine-3-carboxylic acid) derivatives synthesis

Propyl to hexyl derivatives were synthetized as following:
1 g of 5-hydroxynicotinic acid was mixed with 20 ml of corresponding alcohol and 2 ml of concentrated sulfuric acid. The reaction was realized under stirring at 100 °C for 18 hours. The resulting mixture was neutralized with 125 ml of 1M NaHCO₃ solution and extracted 3 times with 50 ml of ethyl acetate.

Ethyl acetate part was dried over anhydrous magnesium sulfate and filtered through silica treated paper to eliminate water and then was evaporated to yield 1.01 g compound (**I-d-3**) (propyl), 1.18 g of compound (**I-d-4**) (butyl), 1.52 g of compound (**I-d-5**) (pentyl), and 1.8 g of compound (**I-d-6**) (hexyl) respectively.

Heptyl to hexadecyl derivatives were synthetized as following:
1 g of 5-hydroxynicotinic acid was mixed with 10 ml of dioxane, 3 equivalents of corresponding alcohol, and 1 ml of concentrated sulfuric acid and proceeded at the same conditions as described previously. After 18 hours, the mix was neutralized by 60 ml of 1M NaHCO₃ solution and extracted 2 times with 60 ml of ethyl acetate.

Ethyl acetate part was dried over anhydrous magnesium sulfate and filtered through silica treated paper to eliminate water and then was evaporated to yield 0.99 g of compound (**I-d-7**) (heptyl), 1.66 g of compound (**I-d-8**) (octyl), 1.79 g of compound (**I-d-9**) (nonyl), 1.88 g of compound (**I-d-10**) (decyl), 1.88 g of compound (**I-d-11**) (undecyl), 1.86 g of compound (**I-d-12**) (dodecyl), 1.43 g of compound (**I-d-13**) (tridecyl), 1.93 g of compound (**I-d-14**) (tetradecyl), 1.87 g of compound (**I-d-15**) (pentadecyl) and 0.41 g of compound (**I-d-16**) (hexadecyl) respectively.

The derivatives (**I-d-1**) **to** (**I-d-16**) have the following formula: 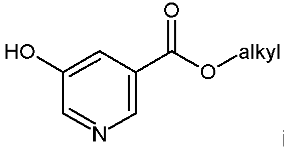 in which alkyl is methyl, ethyl, propyl, butyl, pentyl, hexyl, heptyl, octyl, nonyl, decyl, undecyl, dodecyl, tridecyl, tetradecyl, pentadecyl, and hexadecyl respectively (i.e. R¹ and R⁵ represent hydrogen atoms, R² represents a hydroxyl group, R³ represents a hydrogen atom, and R⁴ represents a ester group of formula -CO₂-L³ in which L³ is an alkyl group comprising from 1 to 30 carbon atoms selected from methyl, ethyl, propyl, butyl, pentyl, hexyl, heptyl, octyl, nonyl, decyl, undecyl, dodecyl, tridecyl, tetradecyl, pentadecyl, and hexadecyl).

### Example 2: 5-O-succinate nicotinate derivatives synthesis

250 mg of each 5-hydroxynicotinate alkyl derivatives as prepared in example 1 derivatives (**I-d-1**) **to** (**I-d-9**) was mixed with 5 mL of water for methyl to butyl derivatives and water/acetonitrile 50/50 (v/v) mix for derivatives with alkyl chain longer than C4, 1.5 equivalents of bromosuccinic acid and 3 equivalents of potassium carbonate at 70 °C for 18 hours. The ethanol was added to solution and the mix was filtered through paper filter. The pure compound was purified by column chromatography.

The derivatives (**I-c-1**) **to** (**I-c-9**) have the following formula: 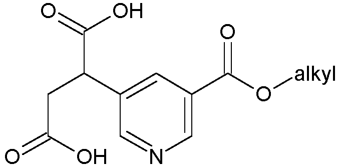 in which alkyl is methyl, ethyl, propyl, butyl, pentyl, hexyl, heptyl, octyl, nonyl, respectively (i.e. R¹ and R⁵ represent hydrogen atoms, R² represents a -O-CH(CO₂H)(CH₂-CO₂H) group, R³ represents a hydrogen atom, and R⁴ represents a ester group of formula -CO₂-L³ in which L³ is an alkyl group comprising from 1 to 30 carbon atoms selected from methyl, ethyl, propyl, butyl, pentyl, hexyl, heptyl, octyl, and nonyl).

### Example 3: 4-hydroxynicotinic acid (4-Hydroxypyridine-3-carboxylic acid) derivatives synthesis

The same procedure as for 5-hydroxynicotinic acid derivatives (propyl to hexyl derivatives) synthesis in example 1 was followed.

The derivatives (**I-e-1**) **to** (**I-e-11**) have the following formula: 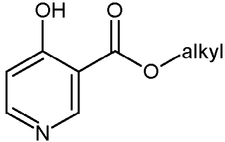 in which alkyl is methyl, ethyl, propyl, butyl, pentyl, hexyl, heptyl, octyl, nonyl, decyl, undecyl respectively (i.e. R¹ and R⁵ represent hydrogen atoms, R² represents a hydrogen atom, R³ represents a hydroxyl group, and R⁴ represents a ester group of formula -CO₂-L³ in which L³ is an alkyl group comprising from 1 to 30 carbon atoms selected from methyl, ethyl, propyl, butyl, pentyl, hexyl, heptyl, octyl, nonyl, decyl, and undecyl).

### Example 4: 4-O-succinate nicotinate synthesis

The same procedure as for 5-O-succinate nicotinate derivatives synthesis in example 2 was followed starting from 4-hydroxynicotinic acid derivatives as prepared in example 3.

The derivatives (**I-a-1**) **to** (**I-a-11**) have the following formula: 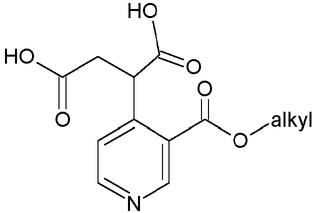 in which alkyl is methyl, ethyl, propyl, butyl, pentyl, hexyl, heptyl, octyl, nonyl, decyl, undecyl respectively (i.e. R¹ and R⁵ represent hydrogen atoms, R² represents a hydrogen atom, R³ represents a -O-CH(CO₂H)(CH₂-CO₂H) group, and R⁴ represents a ester group of formula -CO₂-L³ in which L³ is an alkyl group comprising from 1 to 30 carbon atoms selected from methyl, ethyl, propyl, butyl, pentyl, hexyl, heptyl, octyl, nonyl, decyl, and undecyl).

### Example 5: 3,4-pyridinedicarboxylic acid derivatives synthesis

The same procedure as for 5-hydroxynicotinic acid derivatives (propyl to hexyl derivatives) synthesis in example 1 was followed. The compounds with alkylation on meta position were purified by column chromatography.

The derivatives (**I-b-1**) **to** (**I-b-8**) have the following formula: 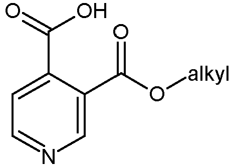 in which alkyl is methyl, ethyl, propyl, butyl, pentyl, hexyl, heptyl, octyl respectively (i.e. R¹ and R⁵ represent hydrogen atoms, R² represents a hydrogen atom, R³ represents a carboxylic acid group, and R⁴ represents a ester group of formula -CO₂-L³ in which L³ is an alkyl group comprising from 1 to 30 carbon atoms selected from methyl, ethyl, propyl, butyl, pentyl, hexyl, heptyl, and octyl).

### Example 6: calibration system based on compounds (I-d-1) to (I-d-16)

The pyridine alkyl ester derivative synthesized above in example 1 have been analyzed on LC1 with a column C1.

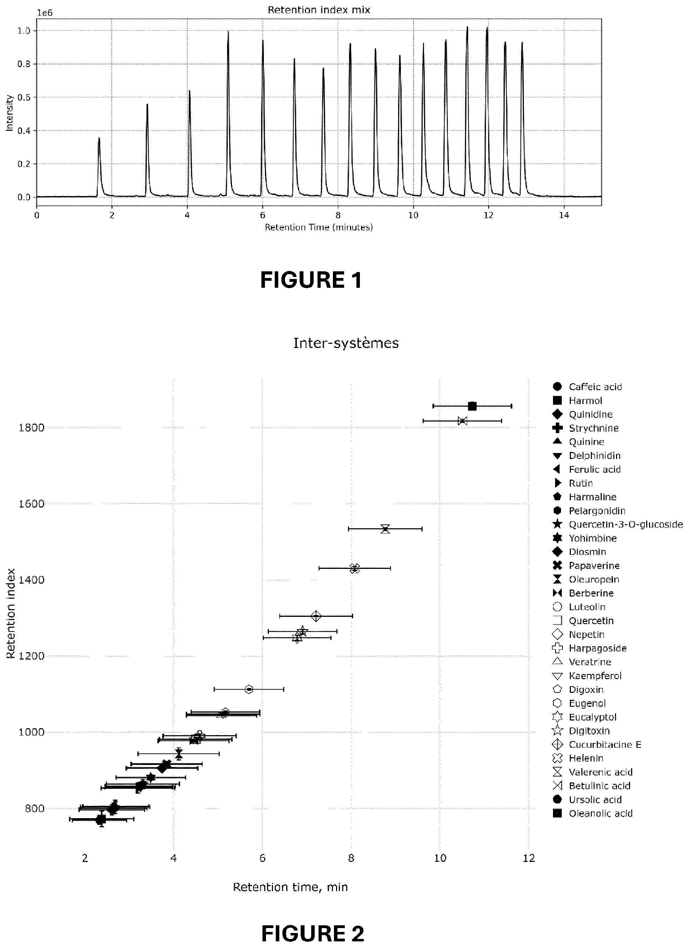

The chromatogram obtained is presented on figure 1 when injecting a calibration system comprising 30 µM of compound (**I-d-1**), 22.5 µM of compound (**I-d-2**), 22.5 µM of compound (**I-d-3**), and 15 µM of each compound (**I-d-4**) **to** (**I-d-16**). It is possible to separate all the derivatives with a device based on LC1 system and C1 column. Peaks from left to right represent compounds (**I-d-1**) **to** (**I-d-16**) respectively, thus forming an homologous series of retention index standards.

This experiment also allowed to obtain the retention time (RT) of each compound (**I-d-1**) **to** (**I-d-16**) for other devices defined by a specific couple LC system/column.

Consequently, RT values of each compound (**I-d-1**) **to** (**I-d-16**) were obtained for all LC system/column devices, namely LC1/C1, LC1/C2, LC2/C1 and LC2/C2 devices.

### Example 7: calculation of retention index of unknown compounds

Thanks to these RT values of example 6, it was possible for each "unknown" compound to determine their retention index according to the formula as described above.

The identification of compounds is mainly necessary in the field of natural products discovery. Therefore, example 7 is focused on the natural chemical pathways, such as Shikimates and Phenylpropanoids, Alkaloids and Terpenoids.

The retention index (RI) of unknown peaks can be calculated using the following equation $RI = 100 \times \left({C}_{np}+\frac{{RT}_{c} - {RT}_{p}}{{RT}_{f} - {RT}_{p}}\right)$, where RTc is the retention time of a peak of unknown compound, RTₚ is the retention time of compound (**I-p**) peak preceding the peak of unknown compound, RT_{f} is the retention time of compound (**I-f**) peak following the peak of unknown compound, and Cₙₚ is the number of carbons of compound (**I-p**) (i.e. which has a retention time peak preceding the retention time peak of unknown compound).

In example 7, 33 different natural products (as "unknown compounds") were evaluated with a calibration system comprising a mixture of 30 µM of compound (**I-d-1**), 22.5 µM of compound (**I-d-2**), 22.5 µM of compound (**I-d-3**), and 15 µM of each compound (**I-d-4**) **to** (**I-d-16**).

The calibration system is injected first, followed by the injection of unknown compounds. As mentioned above, the retention index for each unknown compound is calculated using the following equation $RI = 100 \times \left({C}_{np}+\frac{{RT}_{c} - {RT}_{p}}{{RT}_{f} - {RT}_{p}}\right)$, where RT_{c} is the retention time of a peak of unknown compound, RTₚ is the retention time of compound (**I-d-p**) peak preceding the peak of unknown compound, RT_{f} is the retention time of compound (**I-d-f**) peak following the peak of unknown compound, and Cₙₚ is the number of carbons of compound (**I-d-p**) (i.e. which has a retention time peak preceding the retention time peak of unknown compound).

Figure 2 reports a dot plot of retention index (RI) and retention time (RT) variation, with two different LCMS systems, LC1 and LC2, and column C1.

Figure 3 reports a dot plot of retention index (RI) and retention time (RT) variation, with two different UHPLC columns C1 and C2, and LCMS system LC1.

As clearly shown in figure 2, for LCMS systems, the retention index varies between 0 and 2.7%, whereas the retention time is much less reproducible with variation going up to 30%.

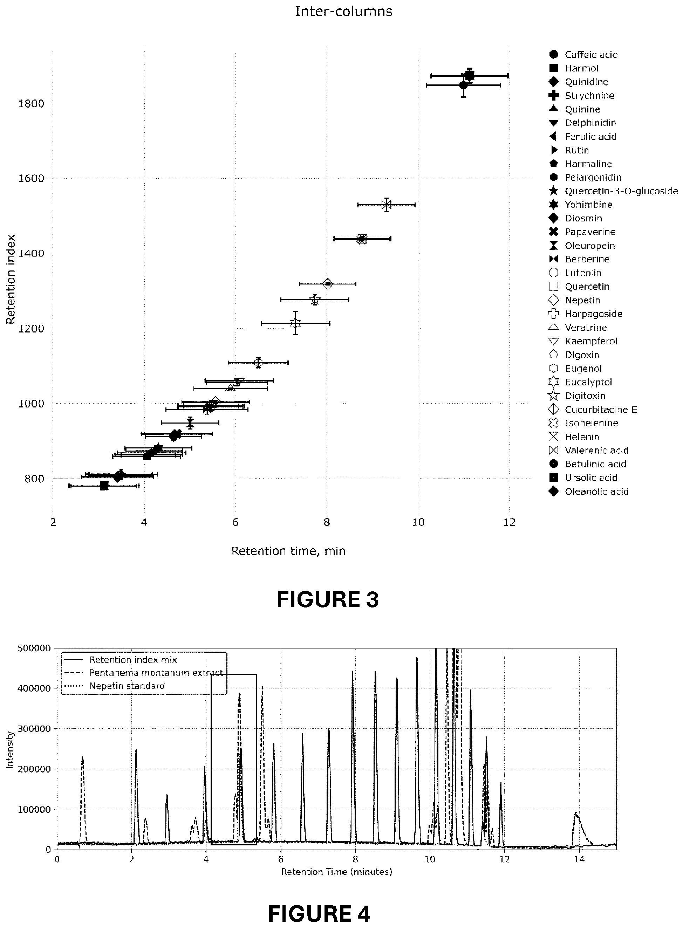

As clearly shown in figure 3, for UHPLC columns, the variation of retention index is less than 3%, whereas the retention time varies from 7 to 25%.

Using this data, a retention index database of natural compounds has been established and is presented in table 1 below:

**TABLE 1**

| **Compound** | **Retention index** | **Compound** | **Retention index** |
|---|---|---|---|
| Caffeic acid | 770 | Quercetin | 983 |
| Harmol | 770 | Nepetin | 995 |
| Quinidine | 798 | Harpagoside | 986 |
| Strychnine | 799 | Veratrine | 1043 |
| Quinine | 806 | Kaempferol | 1052 |
| Delphinidin | 798 | Digoxin | 1052 |
| Ferulic acid | 857 | Eugenol | 1106 |
| Rutin | 847 | Eucalyptol | 1230 |
| Harmaline | 854 | Digitoxin | 1275 |
| Pelargonidin | 862 | Cucurbitacine E | 1307 |
| Quercetin-3-O-glucoside | 860 | Isohelenine | 1426 |
| Yohimbine | 877 | Helenin | 1428 |
| Diosmin | 900 | Valerenic acid | 1523 |
| Papaverine | 916 | Betulinic acid | 1841 |
| Oleuropein | 934 | Ursolic acid | 1867 |
| Berberine | 985 | Oleanolic acid | 1865 |
| Luteolin | 984 | | |

Thus, the calibration system of the present invention proposes replacing a variable parameter of retention time with a stable parameter of retention index, which does not change when using different LCMS systems and/or different columns.

The calibration system comprising compounds (**I-d-i**) and all reference (natural) compounds were analyzed under the same chromatographical conditions.

Additionally, some plant extracts, containing the analyzed compounds, were also injected in this study on LC2 system and C1 column, such as a 70% ethanol extract of *Pentanema montanum.*

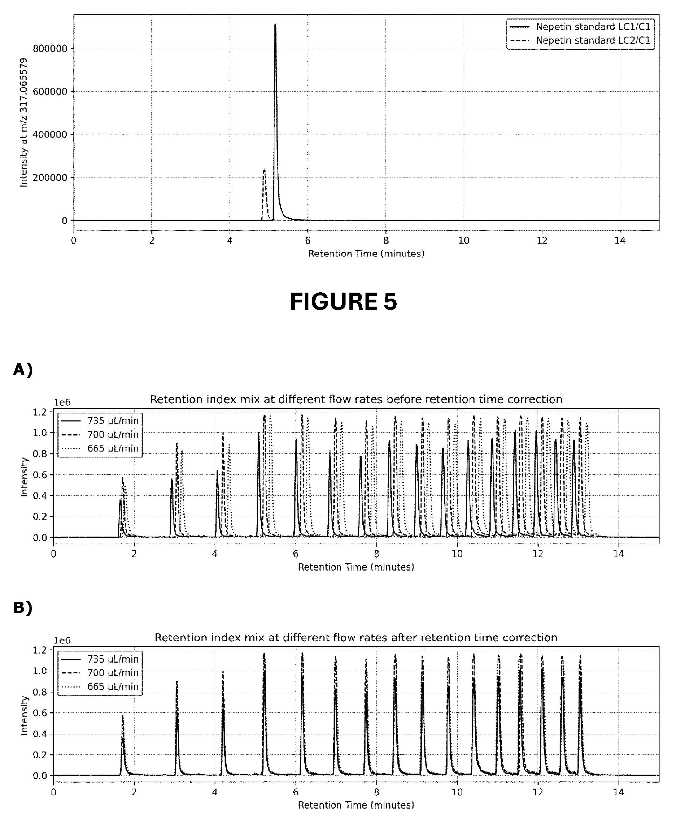

The identification of the peak of unknown compound with retention time 4.9 min, presented on Figure 4, can be realized using the retention index table. The "unknown peak" is situated between peaks of retention index standards (**I-d-3**) and (**I-d-4**), with their respective retention times of 4.0 min and 4.9 min. The retention index of unknown compound is calculated according to the above-mentioned equation as 1000, which corresponds perfectly to the retention index of Nepetin. The standard injection of Nepetin using the same LC2 system and C1 column is also presented in Figure 4, confirming that the unknown compound of the plant extract corresponds perfectly to Nepetin. Additionally, two chromatograms of Nepetin in LC1-C1 and LC2-C1 are presented on Figure 5, showing the differences in their retention time.

Among different chromatographic parameters, the most expensive are LCMS systems and chromatographic columns so that it is important to provide a calibration system which is reliable whatever the LCMS systems and/or whatever the chromatographic columns implemented.

### Example 8: retention time drift correction

Retention time drift is one of the major problems in metabolomics as it can lead to erroneous identification of two identical molecules peaks in different samples. To overcome this problem, it is possible to implement a retention time drift corrector method.

When analyses are realized with a long time interval or samples are analyzed on two same columns but with different batch numbers, the peaks of analyzed compounds can drift. In order to imitate a retention time drift, the flow rate was set to -5% and +5 % of nominal 700 µL/min, i.e. at 665 µL/min and 735 µL/min on a device comprising LC1 and C1. All other chromatographic and mass spectrometry conditions were the same as in the part "LC systems and columns".

The first injection of the homologous series of retention index standards (calibration system) serves as an initial departure point, called reference, and is injected at nominal flow rate 700 µL/min. All retention times of retention index standards peaks (RT) were recorded in a software memory. After each following new injection of the homologous series of retention index standards, the retention times of each retention index standard peak of the reference chromatogram are divided by those of the new chromatogram (RT_{ref}/RT) to calculate a drift coefficient DC for each peak. The linear regression model, DC=aRT+b, was used in order to calculate the coefficients DC that should be applied for each timepoint of chromatogram between retention index standards peaks, where RTs are retention times and DCs are coefficients of two following peaks of retention index standards, respectively. Coefficients for the chromatogram part before the first and after the last peak of retention index standards were kept the same as applied to the first and to the last peak, respectively. The sequence of injections of the homologous series of index retention standards always refers to the reference injection of the homologous series of retention index standards. The homologous series of retention index standards are placed as the first injection in the sequence and may be injected after each 5-10 samples, analyzed with the same chromatographical method. The coefficients calculated for each retention index standard timepoint are then applied to one or more analytes of interest following the homologous series of retention index standards injection, including the calibration system.

For example, if the retention times of compounds (I-a-2) and (I-a-3) in the homologous series of retention index standards are 2.2 and 3.3 min respectively in the reference injection of the homologous series of retention index standards and, 2 and 3 min respectively for the second injection of the homologous series of retention index standards, the coefficients are calculated as following: $DC = \frac{Reference retention time , min}{New retention time , min}$, therefore 1.1 and 1.1 respectively. A linear gradient is constructed between 1.1 and 1.1 as DC and 2 and 3 min as RT. Therefore, the gradient is represented by one coefficient of 1.1. Each scan retention time in the chromatogram between 2.2 and 3.3 min is therefore multiplied by the coefficient 1.1, so 2 min becomes 2.2 min, 2.1 min becomes 2.31 min, 3 min becomes 3.3 min etc... The coefficients are calculated for all peaks of the homologous series of retention index standards in the same way and can then be applied to a new homologous series of retention index standards and/or to all samples of analytes of interest that follow the homologous series of retention index standards in the analysis sequence until the next homologous series of retention index standards analysis where the coefficient calculation is repeated.

The retention time drift for the less polar compound (**I-d-1**) and for the most polar compound (**I-d-16**) of the homologous series of retention index standards were - 0.06 and 0.06 min at 665 and 735 µL/min; and -0.16 and 0.15 min at 665 and 735 µL/min, respectively. The minimal, mean and maximal retention time drifts for samples were 1.2%, 2.5% and 3.8% before correction, whereas 0%, 0.4% and 0.7% after correction.

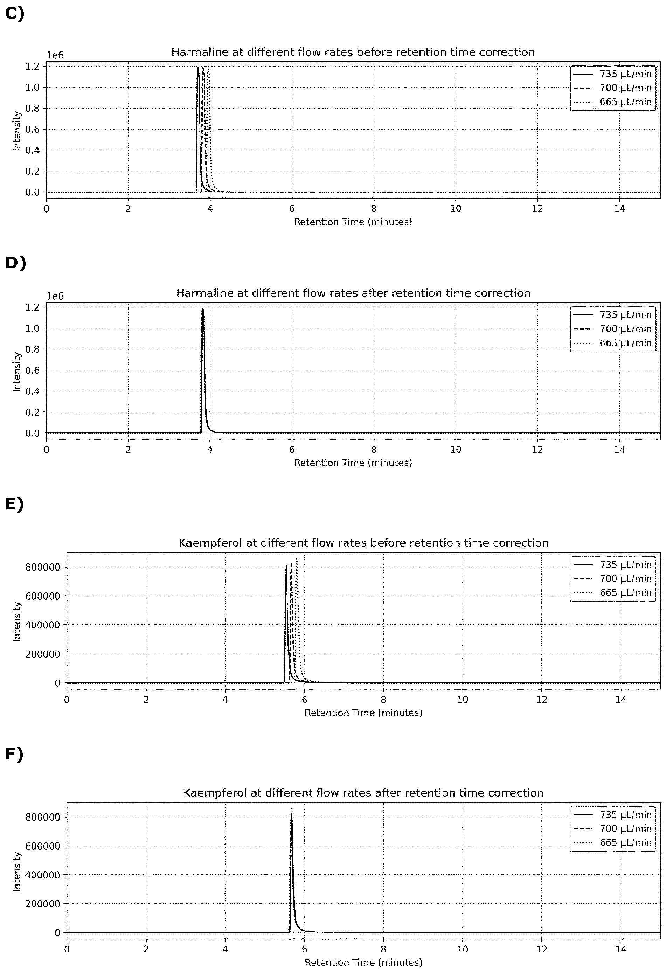

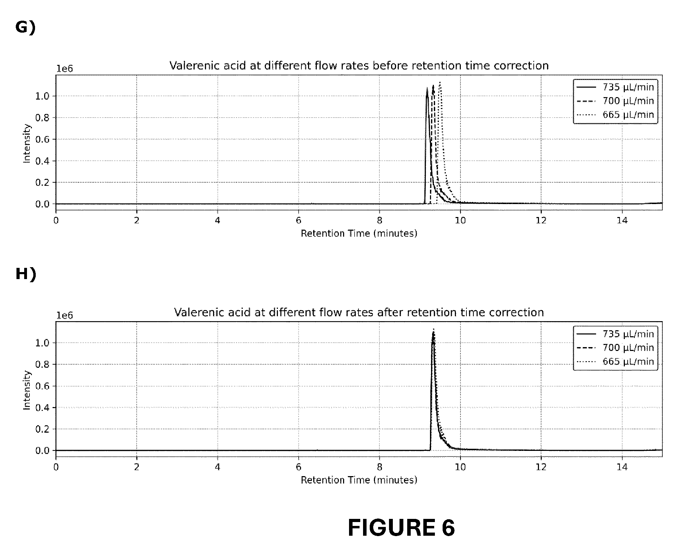

The chromatograms of some samples of different polarity and retention index standards at different flow rates before and after correction are presented on figure 6. In particular, figure 6 represents intensity as a function of retention time of the homologous series of retention index standards before correction (figure 6A) and after correction (figure 6B), of Harmaline before correction (figure 6C) and after correction (figure 6D), and of Kaempferol before correction (figure 6E) and after correction (figure 6F).

### Example 9: LC-MS pump system troubleshooting

Main problems with UHPLC and HPLC systems are overpressure, microleaks and distorted peak shape.

Overpressure was imitated by clogging the filter between the injector and column oven compartments. The overpressure was set to about 150 bars.

Microleaks or dysfunction at each pump were imitated by decreasing the percentage of %A and %B solvents with respective decrease of flow rate. For this analysis, the flow rate was fixed to 500 µL/min with a 5% leak in each pump. The assays were realized with LC2 and C1 column with identical chromatographical and HRMS conditions for LC2 as described above, except the flow rate, which was fixed to 500 µL/min for normal condition. A 5% leak at pump A (H₂O, 0.1%HCOOH), a 5% leak at pump B (ACN, 0.1% HCOOH) and a 5% leak at the same time for both pumps were imitated and are presented in the table 2 below:

**TABLE 2**

| **Time (min)** | **Without leak** | | | **5% Pump A leak** | | |
|---|---|---|---|---|---|---|
| | **A (%)** | **B (%)** | **Flow rate (µL/min)** | **A (%)** | **B (%)** | **Flow rate (µL/min)** |
| 0 | 95 | 5 | 500 | 94.8 | 5.3 | 476 |
| 12 | 0 | 100 | 500 | 0.00 | 100 | 500 |
| 13 | 0 | 100 | 500 | 0.00 | 100 | 500 |
| 13.1 | 95 | 5 | 500 | 94.8 | 5.3 | 476 |
| 15 | 95 | 5 | 500 | 94.8 | 5.3 | 476 |

**TABLE 2 CONTINUED**

| **Time (min)** | **5% Pump B leak** | | | **5% Pump A and B leak** | | |
|---|---|---|---|---|---|---|
| | **A (%)** | **B (%)** | **Flow rate (µL/min)** | **A (%)** | **B (%)** | **Flow rate (µL/min)** |
| 0 | 95.2 | 4.8 | 499 | 95 | 5 | 475 |
| 12 | 0 | 100 | 475 | 0 | 100 | 475 |
| 13 | 0 | 100 | 475 | 0 | 100 | 475 |
| 13.1 | 95.2 | 4.8 | 499 | 95 | 5 | 475 |
| 15 | 95.2 | 4.8 | 499 | 95 | 5 | 475 |

The homologous series of retention index standards (i.e. the calibration system) comprises a mixture of 30 µM of compound (**I-d-1**), 22.5 µM of compound (**I-d-2**), 22.5 µM of compound (**I-d-3**), and 15 µM of each compound (**I-d-4**) to (**I-d-16**). Said calibration system has been injected in standard conditions (i.e. without leak) and in the leak conditions, as described in the table 1 above.

The absolute value of difference of retention times of each peak of the homologous series of retention index standards with and without problem injections have been calculated and the mean value of all differences have been determined. This value was 0.07 if there was a problem with pump A or B, 0.12 if there was a problem with both pumps and 0 if there was no problem. Therefore, if this value exceeds 0.05, there may be a problem with one of pumps and if this value exceeds 0.1 with both of pumps or pump system.

## Claims

1. Use of a pyridine alkyl ester derivative as a retention index standard in liquid chromatography, said pyridine alkyl ester derivative being:
(i) a compound responding to following formula (I): 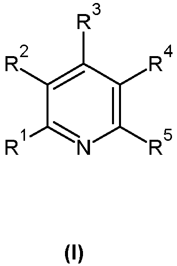 in which:
- R¹, R⁵ represent, independently from each other, a hydrogen atom, a hydroxyl group, a carboxylic acid group, a ester group of formula -CO₂-L¹ in which L¹ is an alkyl group comprising from 1 to 30 carbon atoms, or a group of formula -CH₂-CO₂-L²-OH in which L² is an alkylene group comprising at least 1 carbon atom,
- R², R³, R⁴ represent, independently from each other, a hydrogen atom, a hydroxyl group, a carboxylic acid group, a ester group of formula -CO₂-L³ in which L³ is an alkyl group comprising from 1 to 30 carbon atoms, a group of formula - CH₂-CO₂-L⁴- OH in which L⁴ is an alkylene group comprising at least 1 carbon atom, or a -O-CH(CO₂H)(CH₂-CO₂H) group,
- said compound (I) comprising one ester group represented by formula -CO₂-L¹ (as R¹ or R⁵ group) or formula -CO₂-L³ (as R², R³, or R⁴ group),
a salt, or a solvate thereof,
or,
(ii) a compound responding to following formula (I'): 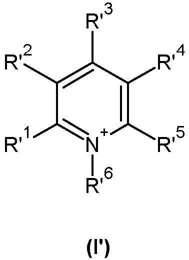 in which:
- R'¹, R'⁵ represent, independently from each other, a hydrogen atom, a hydroxyl group, a carboxylic acid group, a ester group of formula -CO₂-L'¹ in which L'¹ is an alkyl group comprising from 1 to 30 carbon atoms, or a group of formula -CH₂-CO₂-L'²-OH in which L'² is an alkylene group comprising at least 1 carbon atom,
- R'², R'³, R'⁴ represent, independently from each other, a hydrogen atom, a hydroxyl group, a carboxylic acid group, a ester group of formula -CO₂-L'³ in which L'³ is an alkyl group comprising from 1 to 30 carbon atoms, a group of formula - CH₂-CO₂-L'⁴-OH in which L'⁴ is an alkylene group comprising at least 1 carbon atom, or a -O-CH(CO₂H)(CH₂-CO₂H) group,
- R'⁶ represents an alkyl group comprising from 1 to 3 carbon atoms or a - (CH₂)ₙ-CO₂H group with n ranging from 1 to 3,
- said compound (I') comprising one ester group represented by formula - CO₂-L'¹ (as R'¹ or R'⁵ group) or formula -CO₂-L'³ (as R'², R'³, or R'⁴ group),
a salt, or a solvate thereof.

2. Use according to claim 1, wherein R'¹ and R'⁵ represent a hydrogen atom; R'², R'³, represent, independently from each other, a hydrogen atom, a hydroxyl group, a carboxylic acid group, or a -O-CH(CO₂H)(CH₂-CO₂H) group; and R'⁴ represents a ester group of formula -CO₂-L'³ in which L'³ is an alkyl group comprising from 1 to 30 carbon atoms.

3. Use according to claim 1 or claim 2, wherein R'¹ and R'⁵ represent a hydrogen atom; any one of R'² or R'³ represents a hydrogen atom and any other of R'² or R'³ represents a -O-CH(CO₂H)(CH₂-CO₂H) group, a hydroxyl group, or a carboxylic acid group; and R'⁴ represents a ester group of formula -CO₂-L'³ in which L'³ is an alkyl group comprising from 1 to 30 carbon atoms.

4. Use according to any one of the preceding claims, wherein R¹ and R⁵ represent a hydrogen atom; R², R³, represent, independently from each other, a hydrogen atom, a hydroxyl group, a carboxylic acid group, or a -O-CH(CO₂H)(CH₂-CO₂H) group; and R⁴ represents a ester group of formula -CO₂-L³ in which L³ is an alkyl group comprising from 1 to 30 carbon atoms.

5. Use according to any one of the preceding claims, wherein R¹ and R⁵ represent a hydrogen atom; any one of R² or R³ represents a hydrogen atom and any other of R² or R³ represents a -O-CH(CO₂H)(CH₂-CO₂H) group, a hydroxyl group, or a carboxylic acid group; and R⁴ represents a ester group of formula - CO₂-L³ in which L³ is an alkyl group comprising from 1 to 30 carbon atoms.

6. Use according to any one of the preceding claims, wherein formula (I) is selected from the following formulae (I-a) to (I-e): 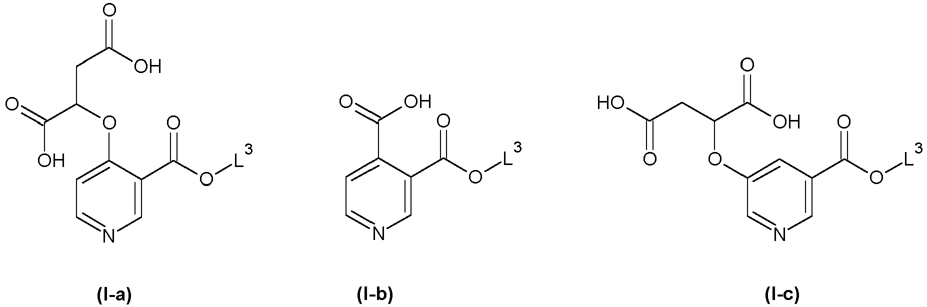 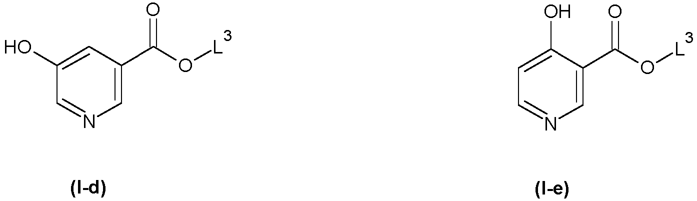 in which L³ is as defined in claim 1.

7. Use according to any one of the preceding claims, wherein said pyridine alkyl ester derivative is (i) a compound of formula (I), a salt, or a solvate thereof.

8. A calibration system for liquid chromatography, wherein it comprises an homologous series of retention index standards, wherein said retention index standards are selected from compounds (i) as defined in any one of claims 1 and 4-7, compounds (ii) as defined in any one of claims 1 to 3, and mixture thereof.

9. A calibration system for liquid chromatography according to claim 8, wherein it comprises an homologous series of retention index standards, wherein said retention index standards are compounds of formula (I'), salts, or solvates thereof as defined in any one of claims 1 to 3, wherein each of said compounds of formula (I'), salts, or solvates thereof has said ester group comprising a different number of carbon atoms from other said compounds of formula (I').

10. A calibration system for liquid chromatography according to claim 8, wherein it comprises an homologous series of retention index standards, wherein said retention index standards are compounds of formula (I), salts, or solvates thereof as defined in any one of claims 1 and 4-7, wherein each of said compounds of formula (I), salts, or solvates thereof has said ester group comprising a different number of carbon atoms from other said compounds of formula (I).

11. A calibration system according to any one of claims 8 to 10, wherein it comprises from 3 to 30 homologues.

12. Use of a calibration system according to any one of claims 8 to 11, in liquid chromatography, preferably in liquid chromatography-mass spectrometry, liquid chromatography with an ultraviolet absorbance detection system, liquid chromatography with electro light scattering detection system, liquid chromatography with electrochemical detection system, or liquid chromatography with charged aerosol detection system.

13. Use according to claim 12, for identifying and/or separating one or more analytes of interest, for evaluating a state of a chromatography system, or for correcting retention time drift.

14. A method for the identification of at least one analyte of interest in liquid chromatography based on a calibration system as defined in any one of claims 8 to 11, wherein it comprises at least the following steps :
- introducing said calibration system as defined in any one of claims 8 to 11 into a liquid chromatography system;
- introducing an analyte of interest into said liquid chromatography system;
- assigning a retention index value to the analyte of interest based on a retention time corresponding to a peak of said analyte of interest, a retention time corresponding to a peak of a compound (i) or (ii) of said calibration system preceding said peak of said analyte of interest, a retention time corresponding to a peak of a compound (i) or (ii) of said calibration system following said peak of said analyte of interest, and a number of carbon atoms present in said compound (i) or (ii) whose retention time peak preceeds said peak of said analyte of interest; and
- comparing the retention index value of the analyte of interest to a library of retention index values for known compounds to identify the analyte of interest.

15. The method according to claim 14, wherein the analyte of interest is a natural product, preferably selected from shikimates, phenylpropanoids, alkaloids, terpenoids, lipids, amino acids, peptides, carbohydrates, flavonoids, glycosides, steroids, saponins, coumarins, lignans, polyketides, or nucleosides; or wherein the unknown compound is from other fields requiring identification, including but not limited to environmental pollutants, industrial chemicals, toxicants, toxins, forensic substances, pharmaceuticals, drug metabolites, xenobiotics, pesticides, herbicides, veterinary drugs, food additives, food contaminants, cosmetic ingredients, synthetic organic intermediates, doping agents, explosives, degradation products, or their derivatives.

16. A method for retention time drift correction, wherein it comprises at least the following steps:
a) introducing a calibration system as defined any one of claims 8 to 11 into a liquid chromatography system to be tested,
b) recording a new chromatogram,
c) comparing said new chromatogram with a reference chromatogram of said calibration system and calculating a drift coefficient for each peak of said calibration system,
d) introducing at least one analyte of interest into said liquid chromatography system, and
e) correcting a retention time drift of said analyte of interest based on said drift coefficients.

17. A method for evaluating a state of a chromatographic system, wherein it comprises at least the following steps:
- introducing a calibration system as defined in any one of claims 8 to 11 into a liquid chromatography system to be tested,
- recording a chromatogram,
- comparing said chromatogram with a reference chromatogram of said calibration system, and
- evaluating compliance of said liquid chromatography system or diagnosing one or more issues of said liquid chromatography system.
